# EUROPÄISCHE PATENTSCHRIFT

(11) **EP 1 654 459 B1**
(45) Veröffentlichungstag und Bekanntmachung des Hinweises auf die Patenterteilung: **22.06.2016**
(21) Anmeldenummer: 04763925.7
(22) Anmeldetag: 09.08.2004
(51) Int. Cl.: F03D 7/04, F03D 7/02

(54) **WINDENERGIEANLAGE MIT EINER ROTORBLATTVERSTELLEINRICHTUNG**
WIND POWER PLANT COMPRISING A ROTOR BLADE ADJUSTING DEVICE
INSTALLATION EOLIENNE MUNIE D'UN DISPOSITIF DE REGLAGE DES PALES DE ROTOR

(30) Priorität: 15.08.2003 DE 10338127
(43) Veröffentlichungstag der Anmeldung: 10.05.2006
(60) Teilanmeldung: 13164286.0
(73) Patentinhaber: Senvion GmbH, 22297 Hamburg (DE)
(72) Erfinder: BRANDT, Karsten, 24113 Kiel (DE); ZEUMER, Jörg, 24768 Rendsburg (DE)
(74) Vertreter: Glawe, Delfs, Moll
(86) Internationale Anmeldenummer: PCT/EP2004/008901
(87) Internationale Veröffentlichungsnummer: WO 2005/017350

(56) Entgegenhaltungen:
- WO-A-02/05406
- DE-A- 10 117 212
- DE-A- 19 845 903
- DE-C- 19 941 630
- US-A- 4 426 192
- US-A- 5 907 192
- US-B1- 6 428 274

## Beschreibung

Die vorliegende Erfindung betrifft eine Windenergieanlage mit einem Rotor.

Bekannte Windenergieanlagen weisen im allgemeinen einen Rotor mit drei Rotorblättern auf, wobei der Rotor zur Erzeugung einer elektrischen Leistung direkt oder indirekt mit einem Generator gekoppelt ist. Der Generator kann weiterhin mit einem elektrischen Netz eines Netzbetreibers zur Einspeisung der erzeugten elektrischen Leistung koppelbar sein.

Bei gattungsgemäßen Windenergieanlagen sind die Rotorblätter winkelverstellbar ausgebildet. Auf diese Weise kann zum Beispiel die Ausrichtung der Rotorblätter bei starkem Windaufkommen so eingestellt werden, dass die Energieaufnahme aus dem Wind reduziert werden kann. Zur Verstellung der Rotorblätter sind gattungsgemäße Windenergieanlagen so ausgebildet, dass mindestens ein Blattverstellsystem für alle drei Rotorblätter vorgesehen ist. Vorzugsweise sind bekannte Windenergieanlagen so ausgebildet, dass zu jedem Rotorblatt mindestens eine Rotorblattverstelleinrichtung vorgesehen ist, wobei die Rotorblattverstelleinrichtung unter anderem einen Blattverstellantrieb mit einem Gleichstrommotor aufweist, der über einen Umrichter mit dem elektrischen Netz gekoppelt ist. In der Regel wird die relativ hohe Drehzahl des Antriebsmotors über ein Getriebe sehr hoher Übersetzung auf ein langsam drehendes Antriebsritzel übersetzt, welches mit einem direkt mit dem Rotorblatt verbundenen Zahnkranz kämmt. Weiterhin weist die Rotorblattverstelleinrichtung eine Steuerungseinrichtung auf, über die die Regelung des Blattverstellantriebs erfolgt.

Aus Sicherheitsgründen und zum Schutz der Windenergieanlage muss gewährleistet sein, dass die Windenergieanlage zu jeder Zeit und bei jeder Betriebsstörung heruntergefahren werden kann.

In der Regel werden bekannte Windenergieanlagen durch Drehen der Rotorblätter in die sogenannte Fahnenstellung heruntergefahren. Mit der Fahnenstellung wird das Herausdrehen der Rotorblätter aus dem Wind bezeichnet, so dass, wie bei einer Fahne, dem Wind nur eine minimale Angriffsfläche geboten wird und somit die notwendige Energie zur Aufrechterhaltung der Drehbewegung des Rotors nicht mehr aus dem Wind aufgenommen werden kann und die Anlage aufgrund dessen gestoppt oder zumindest in eine nur sehr langsame Drehbewegung versetzt wird.

Eine Betriebsstörung kann beispielsweise der Ausfall des elektrischen Netzes sein. In einem solchen Fall können Netzbetreiber vorgeben, dass zum Schutz des elektrischen Netzes die Windenergieanlage innerhalb eines definierten Zeitraums vom elektrischen Netz getrennt werden muss. Durch die Trennung der Windenergieanlage vom Netz kann zwangsläufig auch die erzeugte Leistung nicht mehr ins Netz eingespeist werden, was sehr schnell zu kritischen Überdrehzahlzuständen führen kann. Daher muss die Anlage zu ihrem Schutz insbesondere bei einem Netzausfall herunterfahrbar sein.

Ein Netzausfall hat jedoch zur Folge, dass auch der elektrische Blattverstellantrieb nicht mehr mit Energie aus dem Netz versorgt wird und die Windenergieanlage nicht mehr über die Rotorblattverstellung heruntergefahren werden kann. Um das Herunterfahren der Windenergieanlage dennoch über das Drehen der Rotorblätter in die Fahnenstellung gewährleisten zu können, wird in der Rotorblattverstelleinrichtung bekannter Windenergieanlagen zusätzlich eine Gleichspannungsquelle vorgesehen, die bei einem Netzausfall direkt mit dem Blattverstellantrieb gekoppelt wird, so dass eine Energieversorgung des Blattverstellantriebs zu jeder Zeit sichergestellt werden kann.

Der Nachteil dieser bekannten Windenergieanlage ist jedoch, dass es aufgrund der direkten Kopplung der Gleichspannungsquelle mit dem Blattverstellantrieb nur möglich ist, die Rotorblätter ungeregelt, in der Regel in Richtung Fahnenstellung zu drehen. Eine Regelung zur genauen Einstellung eines gewünschten Rotorblattwinkels oder insbesondere einer Rotorblattverstellgeschwindigkeit ist bei Betriebsstörungen mit gattungsgemäßen Windenergieanlagen nicht möglich.

Das bedeutet, dass bei Ausfall des Netzes, die Rotorblätter einer Windenergieanlage zwangsweise immer in die Brems- bzw. Fahnenstellung gedreht und die Anlage in der Regel relativ abrupt heruntergefahren wird. Ein abrupter Stillstand einer Anlage bedeutet aber immer auch das Auftreten hoher Lasten, die in der Dimensionierung der Anlage berücksichtigt werden müssen und somit zwangsläufig zu höheren Anlagenkosten führen.

Zusätzlich bedeutet das zwangsweise Herunterfahren der Anlage auch immer wirtschaftliche Verluste für den Betreiber. Diese Verluste sind besonders ärgerlich, wenn beispielsweise der Netzausfall nur von sehr kurzer Dauer ist, da das Herunterfahren und das Wiederanfahren der Anlage in der Regel wesentlich mehr Zeit erfordert als der Netzausfall andauert.

Beispiele aus dem Stand der Technik sind aus US 5907192, US 6428274 und DE 10117212 bekannt.

Aufgabe der vorliegenden Erfindung ist es, eine bekannte Windenergieanlage so weiterzubilden, dass eine optimierte Regelung des Rotorblattwinkels im Normalbetrieb aber insbesondere bei unterschiedlichen Betriebsstörungen, z.B. einem Netzausfall, möglich ist.

Gelöst werden die unterschiedlichen Aspekte der Aufgabe mit einer Windenergieanlage gemäß der Ansprüche 1 und 10.

Die Windenergieanlage gemäß Anspruch 1 weist einen Rotor mit mindestens einem winkelverstellbaren Rotorblatt auf. Weiterhin umfasst sie einen Generator, der zur Erzeugung elektrischer Leistung direkt oder indirekt mit dem Rotor und zur Einspeisung der elektrischen Leistung direkt oder indirekt mit einem elektrischen Netz koppelbar ist, sowie mindestens eine Rotorblattverstelleinrichtung zur Einstellung des Winkels des Rotorblatts, wobei bei mehreren Rotorblättern, in der Regel sind es drei Blätter pro Windenergieanlage, eine Rotorblattverstelleinrichtung pro Rotorblatt vorgesehen sein kann.

Die Rotorblattverstelleinrichtung besteht unter anderem aus mindestens einem Blattverstellantrieb mit mindestens einem Gleichstrommotor, der über einen Umrichter mit dem elektrischen Netz koppelbar ist, einer mit dem Umrichter gekoppelten Steuerungseinrichtung, über die die Steuerung und/ oder Regelung des Blattverstellantriebs erfolgt, und einer Gleichspannungsquelle, die bei Ausfall des Netzes eine Energieversorgung des Blattverstellantriebs gewährleistet.

Es wird daraufhin gewiesen, das im folgenden nicht mehr zwischen Steuerung und Regelung unterschieden wird, da mit der vorliegenden Erfindung sowohl eine Steuerung als auch eine Regelung der Rotorblattverstelleinrichtung möglich ist. Der Ausdruck Steuerungseinrichtung umfasst also immer auch die Möglichkeit der Regelung der Blattwinkel.

Erfindungsgemäss ist vorgesehen, dass die Gleichspannungsquelle sowohl direkt mit dem Blattverstellantrieb als auch indirekt über den Umrichter mit dem Blattverstellantrieb koppelbar ist, wobei die Gleichspannungsquelle vorrangig indirekt über den Umrichter mit dem Blattverstellantrieb gekoppelt wird und der Umrichter so ausgebildet ist, dass er in der Lage ist, sowohl aus dem Netz stammende Wechselspannung als auch die aus der Gleichspannungsquelle stammende Gleichspannung umzuwandeln.

Die erfindungsgemäße Windenergieanlage bietet den Vorteil, dass der Blattverstellantrieb auch bei Ausfall des Netzes über die Steuerungseinrichtung geregelt werden kann. Bei einem Netzausfall und der damit verbundenen Notwendigkeit die Anlage herunterzufahren, wird das Rotorblatt nicht mehr unverzüglich bzw. ungeregelt in die Fahnenstellung gedreht, sondern es besteht die Möglichkeit, das Rotorblatt z. B. langsam mit vorgegebener Verstellgeschwindigkeit in die Fahnenstellung zu drehen. Dies bietet den Vorteil, dass die Anlage nicht abrupt stillgesetzt wird, sondern sanft heruntergefahren werden kann.

Die nach wie vor mögliche Alternative der direkten Kopplung der Gleichspannungsquelle mit dem Blattverstellantrieb bietet den Vorteil, dass für den Fall des Ausfalls des Umrichters aus Sicherheitsgründen und zum Schutz der Anlage gewährleistet werden kann, dass die Windenergieanlage durch Drehen der Rotorblätter in die Fahnenstellung herunterfahrbar ist.

Es ist bekannt, bei Windenergieanlagen deren Blattverstellantrieb anstelle eines Gleichstrommotors einen Wechselstrommotor aufweisen, die Gleichspannungsquelle mit dem Umrichter zu koppeln. Der Nachteil dieser nicht gattungsgemäßen Windenergieanlagen ist jedoch, dass bei einem Funktionsausfall des Umrichters, beispielsweise durch einen Blitzschlag, gleichzeitig die Rotorblattverstelleinrichtung ausfällt und damit keine Möglichkeit gegeben ist, die Windenergieanlage in einem Notfall herunterzufahren.

Daher ist der Einsatz eines Gleichstrommotors in dem Blattverstellantrieb als besonders vorteilhaft anzusehen, da der Gleichstrommotor auch bei einem nicht funktionsfähigen Umrichter direkt mit der Gleichspannungsquelle koppelbar ist und somit sichergestellt ist, dass die Rotorblätter in jedem Fall in die Fahnenstellung gedreht werden können, um die Windenergieanlage herunterzufahren.

Wie oben bereits erwähnt, kann die Windenergieanlage im Stand der Technik bei einem Netzausfall nur heruntergefahren werden, indem die Rotorblätter zwangsweise in die Fahnenstellung gedreht werden. Das zwangsweise Drehen der Rotorblätter führt jedoch dazu, dass die Anlage relativ abrupt heruntergefahren wird, wodurch in der Anlage sehr hohe Lasten entstehen.

Aufgrund der Möglichkeit die erfindungsgemäße Windenergieanlage geregelt herunterzufahren, können diese hohen Lasten reduziert werden, so dass diese bei der Dimensionierung der Anlage nicht mehr in dem Maße berücksichtigt werden müssen und die Anlage somit auf vorteilhafte Weise kostengünstiger herstellbar ist.

Zudem kann ein Gleichlauf der Rotorblätter beim Drehen in die Fahnenstellung durch die übergeordnete Steuerungseinrichtung sichergestellt werden. Das heißt, dass die Rotorblätter synchron in die Fahnenstellung drehbar sind, wodurch wiederum niedrigere Lasten in der Anlage erreicht werden.

Die vorliegende Erfindung bietet zudem den Vorteil, dass die Anlage bei einem Netzausfall nicht zwangsläufig heruntergefahren werden muss, sondern es wird die Möglichkeit geschaffen, bei einem Netzausfall die Rotordrehzahl der erfmdungsgemäßen Windenergieanlage über einen definierten Zeitraum mittels des weiterhin regelbaren Rotorblattwinkels konstant zu halten oder anderweitig wie gewünscht zu regeln. Auf vorteilhafte Weise kann somit der Betrieb der Anlage bei einem kurzfristigen Netzausfall aufrecht erhalten werden, wodurch die wirtschaftlichen Verluste, die sonst bei einer sofortigen Stillsetzung der Anlage entstehen würden, reduziert werden.

In einer vorteilhaften Ausgestaltung der Erfindung kann die Regelung der Rotorblattverstellung einer erfindungsgemäßen Windenergieanlage bei einem Netzausfall über die Steuerungseinrichtung mittels eines Betriebsstörungsmodus erfolgen.

Dabei kann der Betriebsstörungsmodus in der Anlage hinterlegt sein. Es besteht aber auch die Möglichkeit, dass der Modus erst bei Auftreten einer Betriebsstörung in der Steuerungseinrichtung erzeugt oder das der Betriebsstörungsmodus der Steuerungseinrichtung zugeführt wird, zum Beispiel von einem Betriebsführungsrechner, der die gesamte Betriebsführung der Anlage oder des ganzen Windparks regelt.

Über den Betriebsstörungsmodus kann festgelegt werden, wie die Regelung der Blattverstellung bei einer Betriebsstörung aussehen soll. Dabei kann der Betriebsstörungsmodus so programmiert sein, dass er in der Lage ist, zwischen unterschiedlichen Betriebsstörungen zu unterscheiden und entsprechende Regelungsmaßnahmen durchzuführen. Beispielsweise kann im Betriebsstörungsmodus hinterlegt sein, dass bei einem Ausfall einer oder mehrerer Phasen des Netzes die Rotordrehzahl über eine definierte Zeit konstant gehalten wird und die Windenergieanlage erst nach Ablauf dieser Zeit und weiterhin andauerndem Netzausfall heruntergefahren wird.

Im Betriebsstörungsmodus kann beispielsweise auch hinterlegt sein, dass bei Ausfall des Umrichters die Batterie(n) direkt auf den Blattverstellantrieb geschaltet wird. Weiterhin kann im Betriebsstörungsmodus auch die Vorgehensweise bei einem manuellen Notaus hinterlegt sein, da hierbei die Anlage zur Erhöhung der Personensicherheit weitestgehend spannungsfrei geschaltet sein muss. Im Betriebsstörungsmodus kann hierfür z. B. hinterlegt sein, dass die Anlage so schnell wie möglich, aber auch so anlagenschonend wie möglich, mit einer geregelten Blattverstellgeschwindigkeit zum Stillstand gebracht wird.

Die erfindungsgemäße Windenergieanlage bietet gemäß einer weiteren Ausgestaltung der Erfindung den Vorteil, dass bei einem Stillstand der Windenergieanlage und gleichzeitiger Abwesenheit des Netzes der Blattverstellantrieb durch indirekte Kopplung mit der Gleichspannungsquelle über die Steuerungseinrichtung zum Anfahren der Anlage steuerbar ist, wobei mit Abwesenheit des Netzes sowohl ein Netzausfall als auch ein bewusstes Wegschalten des Netzes verstanden werden kann.

In einer weiteren vorteilhaften Ausgestaltung ist vorgesehen, dass die Gleichspannungsquelle eine Batterie ist. Eine Batterie bietet den Vorteil ein gängiger Energiespeicher zu sein, der in der Lage ist, die für den Betrieb des Gleichstrommotors notwendige Energie zur Verfügung zu stellen.

Es besteht aber auch die Möglichkeit als Gleichspannungsquelle sogenannte Ultracaps zu verwenden, wobei es sich um kompakte Kondensatoren hoher Energiedichte handelt, die in der Lage sind die erforderliche Energie für den Antrieb des Gleichstrommotors zu speichern.

Denkbar wäre es aber auch, einen Gleichstromgenerator vorzusehen, der vorzugsweise durch die Drehbewegung des Rotors, also durch dessen kinetische Energie angetrieben wird. Hierzu wird ein Aktivteil des Generators rotierend mit dem Windrotor (vorzugsweise mit der Rotornabe) gekoppelt, der andere Aktivteil feststehend mit der Maschinengondel. Sobald der Rotor dreht, lässt sich eine drehzahlabhängige Gleichspannung an den Generatorklemmen abgreifen, die nach ggf. erforderlicher Wandlung (z.B. Hochsetzsteller) an den Umrichterzwischenkreis bzw. direkt an den Blattverstellantrieb angelegt werden kann.

Zur Energieversorgung ist der Gleichstrommotor des Blattverstellantriebs im Normalbetrieb über einen Umrichter mit dem Wechselstromnetz des Netzbetreibers verbunden, wobei der Umrichter die aus dem Netz zur Verfügung gestellte Wechselstromenergie in eine Gleichstromenergie umwandelt. Gemäß der vorliegenden Erfindung ist der Umrichter zusätzlich in der Lage eine zugeführte Gleichspannungsenergie dergestalt umzuwandeln, dass der Gleichstrommotor über den Umrichter geregelt betrieben werden kann.

Gemäß einer vorteilhaften Ausgestaltung der Erfindung kann der Umrichter so ausgebildet sein, dass er einen Gleichrichter aufweist, über den die aus dem Netz zugeführte Wechselspannung in eine pulsierende Gleichspannung umgewandelt wird, sowie einen Gleichspannungszwischenkreis, der die Aufgabe hat, die Spannung zwischen dem Gleichrichter und dem Gleichstrommotor zu glätten. Der Gleichspannungszwischenkreis dient im wesentlichen als Puffer um transiente Lastanforderungen (Spannungseinbrüche) auszugleichen.

Da aber für den geregelten Betrieb des Gleichstrommotors eine Gleichstromenergie mit variablen Strom- und Spannungswerten erforderlich ist, weist der Umrichter zusätzlich einen Gleichstromsteller mit aktiven Schaltern auf, wobei die aktiven Schalter über die Steuerungseinrichtung schaltbar sind. Durch entsprechende Steuerung der aktiven Schalter kann auf diese Weise die Energie im Zwischenkreis in eine einstellbare Gleichstromenergie umgewandelt werden, die so ausgebildet ist, dass der Gleichstrommotor das Rotorblatt mit einer gewünschten Verstellgeschwindigkeit in die gewünschte Winkelstellung dreht.

Gemäß einer weiteren vorteilhaften Ausgestaltung kann der aktive Schalter in dem Gleichstromsteller ein IGBT-Leistungstransistor sein. IGBT-Leistungstransistoren bieten den großen Vorteil, dass sie nach Bedarf ein- und ausschaltbar sind. Dieser Vorteil schafft die Möglichkeit, den Gleichstrommotor über den Umrichter geregelt zu betreiben unabhängig davon, ob der Umrichter mit dem elektrischen Netz oder mit der Gleichspannungsquelle gekoppelt ist.

In einer weiteren vorteilhaften Ausgestaltung der Erfindung ist vorgesehen, dass die Kopplung der Gleichspannungsquelle mit dem Umrichter über den Gleichspannungszwischenkreis erfolgt. Die Einkopplung kann beispielsweise über Dioden erfolgen, dabei muß der Spannungsunterschied zwischen der Gleichspannungsquelle und Gleichspannungszwischenkreis entsprechend angepasst werden, um Belastungen einzelner Komponenten zu vermeiden. Diese Ausgestaltung bietet den Vorteil, dass die Gleichspannungsquelle zum einen den Gleichspannungszwischenkreis bei Netzausfall stützt. Zum anderen wird dem Umrichter auf diese Weise die notwendige Energie für den geregelten Betrieb des Gleichstrommotors trotz Netzausfall zur Verfügung gestellt.

Gemäß einer weiteren Ausgestaltung ist vorgesehen, dass die Rotorblattverstelleinrichtung einen Winkelgeber aufweist, der einen Ist-Winkel des Rotorblatts ermittelt und den ermittelten Ist-Wert der Steuerungseinrichtung mitteilt. Dies bietet den Vorteil, dass die Steuerungseinrichtung oder ein mit der Steuerungseinrichtung gekoppelter Betriebsführungsrechner anhand des ermittelten Wertes auch unter Berücksichtigung weiterer Anlagenparameter einen Rotorblattwinkel ermitteln kann, der einen optimalen Betrieb und damit verbunden eine optimale Energieausbeute ermöglicht.

Weiterhin bietet das Vorsehen des Winkelgebers die Möglichkeit einen, über die Steuerungseinrichtung vorgegebenen Winkel zu kontrollieren und ggf. zu korrigieren.

Die bislang beschriebenen Maßnahmen betreffen die Lösung von Betriebsstörungen, die bei der elektrischen Stromversorgung der Rotorblattverstelleinrichtung auftreten können. Ziel ist es, eine geregelte Verstellung der Rotorblätter z.B. bei Ausfall des Netzes zu ermöglichen. Damit wird einem wesentlichen Problem, das beim Betrieb einer Windenergieanlage auftreten kann, Rechnung getragen.

Allerdings sind Einrichtungen zur Rotorblattverstellung relativ komplex. Denkbar sind auch andere Störungen, die die geregelte Verstellung der Rotorblätter beeinträchtigen können, so dass grundsätzlich immer Optimierungsbedarf besteht.

Im folgenden soll ein weiterer Lösungsansatz aufgezeigt werden, mit dem die geregelte Verstellung der Rotorblätter optimiert und insbesondere im Fall einer weiteren unabhängig vom elekrischen System auftretenden Störung gewährleistet werden kann.

Beide im Rahmen der Erfindung besprochenen Lösungsansätze erlauben separat oder auch kombiniert, dass die Anlage optimal steuer- und/oder regelbar ist und bei Auftreten von unterschiedlichen Betriebsstörungen betriebsfähig bleibt. Das wesentliche Ziel, eine Windenergieanlage so auszubilden, dass das Auftreten von Betriebsstörungen kompensiert wird und die Anlage nur noch bei wirklich schwerwiegenden Betriebstörungen heruntergefahren werden muss, wird so auf einfache Weise erreicht.

Gemäß dem weiteren Lösungsansatz ist vorgesehen, dass die Rotorblattverstelleinrichtung mindestens zwei Winkelgeber aufweist, wobei die Steuerungseinrichtung so ausgebildet ist, dass sie bei Ausfall eines Winkelgebers auf den anderen Winkelgeber umschaltet.

In vorteilhafter Ausgestaltung der Erfindung kann der erste Winkelgeber beispielsweise auf der Motorwelle des Gleichstrommotors des Blattverstellantriebs angeordnet sein, wobei die Motorwelle unter anderem die Antriebsseite oder sogenannten "schnelle" Seite (aufgrund der höheren Umdrehungsgeschwindigkeit) des Rotorblattverstellantriebes bildet.

Vorteilhaft wird der zweite Winkelgeber direkt auf der Rotorblattachse oder auf einem mit der Verzahnung des Blattlagers kämmenden Ritzel vorgesehen. Das heißt der zweite Winkelgeber wird auf der sogenannten Abtriebs- bzw. Rotorblattseite oder "langsamen" Seite der Rotorblattverstelleinrichtung angeordnet.

Das Vorsehen von mindestens einem weiteren Winkelgeber bietet den Vorteil, dass die gemessenen Blattwinkel miteinander vergleichbar sind und somit bei starken Abweichungen der Messwerte voneinander ein eventueller Defekt eines Sensors oder beispielsweise ein eventueller Ausfall (Bruch) des Blattantriebs detektierbar ist. In einem solchen Fall kann dann die Steuerungseinrichtung auf den zweiten Winkelgeber umschalten, so dass sichergestellt, das zu jedem Zeitpunkt der aktuelle Blattwinkel ermittelbar ist.

Besonders vorteilhaft werden beide Lösungsansätze kombiniert. Man erreicht auf diese Weise eine hochabgesicherte, auch im Normalbetrieb optimal geregelte Anlage.

Aber die zuletzt beschriebene Lösung kann auch separat verwirklicht werden, also nicht nur in einer beanspruchten Windenergieanlage, die eine Rotorblattverstelleinrichtung mit einem Gleichstromantrieb aufweist. Der Einsatz eines oder mehrerer Winkelgeber kann ohne weiteres auch in anderen Rotorblattverstelleinrichtungen, die z. B. einen Wechselstromantrieb aufweisen, realisiert werden.

Weitere Merkmale, Aspekte und Vorteile der vorliegenden Erfindung werden zum Teil durch die nachfolgende Beschreibung offenbart und sind zum Teil durch die Beschreibung nahegelegt oder ergeben sich bei der praktischen Verwendung der Erfindung. Eine Ausführungsform der Erfindung wird nachfolgend im Detail beschrieben. Es versteht sich, dass andere Ausführungsformen verwendet werden und Änderungen gemacht werden können, ohne den Bereich der Erfindung zu verlassen, wie sie durch die anhängenden Ansprüche definiert wird.

Es zeigen:
- Fig 1: eine Windkraftanlage in Frontalansicht,
- Fig 2: eine Rotorblattverstelleinrichtung in schematischer Darstellung

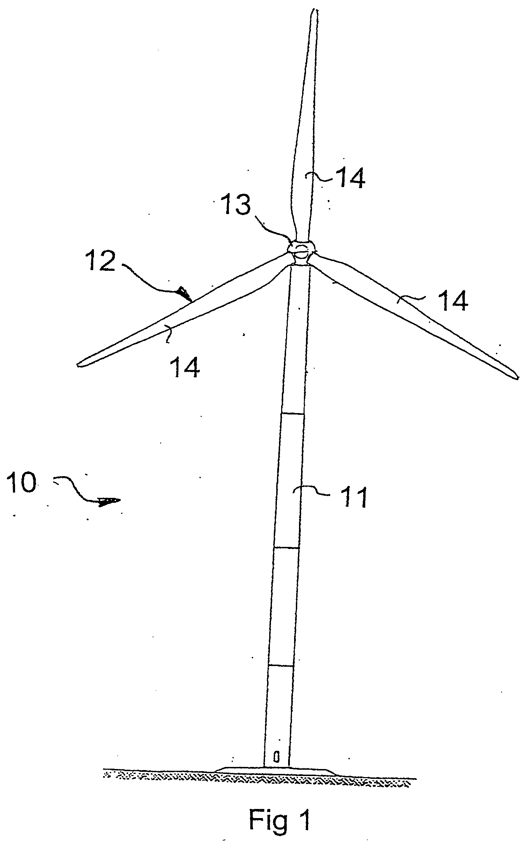

Fig 1 zeigt eine Windenergieanlage 10 mit einem Turm 11 an dessen oberen Ende ein Rotor 12 angeordnet ist. Der Rotor 12 besteht aus einer Rotornabe 13 sowie drei Rotorblättern 14, die an der Nabe 13 angeordnet sind.

Die Rotorblätter 14 sind mit der Rotornabe 13 drehbar verbunden und können zur Einstellung der Energieaufnahme des Rotors 12 aus dem Wind individuell um ihre Längsachse verstellt werden. Die Verbindung der Rotorblätter 14 mit der Rotornabe 13 erfolgt über Lager, zum Beispiel Vier-Punkt-Lager oder Kugeldrehverbindungen, wobei die Lagerkomponente an der das Rotorblatt befestigt ist, eine Innenverzahnung aufweist.

Die Verstellung der Rotorblätter 14 erfolgt über die, nicht im Detail dargestellte Rotorblattverstelleinrichtung mit einem Blattverstellantrieb, wobei der Blattverstellantrieb ein Antriebsritzel aufweist, dass so angeordnet ist, dass es mit der Innenverzahnung des Lagers kämmt. Weiterhin weist der Blattverstellantrieb einen Antriebsmotor auf, der über ein Getriebe mit dem Antriebsritzel gekoppelt ist, so dass das Antriebsritzel über den Antriebsmotor in eine Drehbewegung versetzt werden kann. Da das Antriebsritzel mit der Innenverzahnung der Lagerkomponente, an der das Rotorblatt befestigt ist, kämmt, kann das Rotorblatt auf diese Weise mittels des Antriebsmotors verstellt werden.

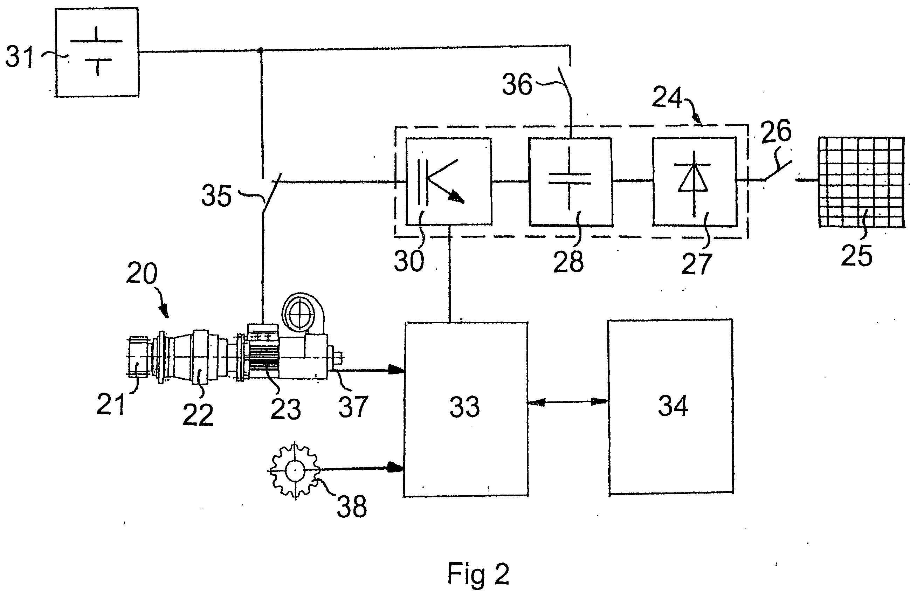

In Fig 2 ist schematisch eine Rotorblattverstelleinrichtung mit einem Blattverstellantrieb 20 dargestellt. Der dargestellte Blattverstellantrieb 20 weist ein Antriebsritzel 21, ein Getriebe 22 sowie einen Antriebsmotor 23 auf, wobei es sich in dem dargestellten Ausführungsbeispiel um einen Gleichstrommotor handelt.

Der Gleichstrommotor 23 ist über einen Umrichter 24 mit einem elektrischen Netz 25 eines Netzbetreibers koppelbar, wobei das elektrische Netz 25 eine dreiphasige Wechselstromenergie liefert. Zwischen dem Umrichter 24 und dem elektrischen Netz 25 sind zusätzlich Schaltelemente 26 vorgesehen, wodurch die Möglichkeit geschaffen wird, den Umrichter 24 und damit die Rotorblattverstelleinrichtung vom elektrischen Netz 25 zu trennen.

Der Umrichter 24 hat die Aufgabe, die vom elektrischen Netz zugeführte Wechselstromenergie in eine Gleichstromenergie, die einen Betrieb des Gleichstrommotors ermöglicht, umzuwandeln. Zu diesem Zweck besteht der Umrichter 24 aus einem Gleichrichter 27, einem Gleichspannungszwischenkreis 28 und einem Gleichstromsteller 30.

Der Gleichrichter 27 weist aktive Schalter auf, wobei es sich bei dem dargestellten Beispiel um IGBT-Leistungstransistoren handelt, die über eine Steuerungseinrichtung 33 ein- und ausschaltbar sind, wobei die Steuerungseinrichtung 33 mit einem Betriebsführungsrechner 34 gekoppelt ist, der den gesamten Betrieb der Windenergieanlage überwacht und regelt. Der Einsatz der aktiven Schalter bietet den Vorteil, dass die von dem elektrischen Netz 25 zugeführte Wechselstromenergie über die Steuerungseinrichtung 33 mittels des Pulsweitenmodulationsverfahrens durch entsprechendes Ein- und Ausschalten der aktiven Schalter modifiziert wird, so dass eine Gleichstromenergie mit vorherbestimmten Parametern erzeugt wird, die den Gleichstrommotor 23 gezielt zur Verstellung des Rotorblatts in eine vorgegebene Position antreiben.

Bei Ausfall des elektrischen Netzes 25 oder, für den Fall, dass das elektrische Netz 25 bewusst durch Öffnen der Schaltelemente 26 von der Windenergieanlage 10 getrennt worden ist, erfolgt eine Kopplung des Gleichstrommotors 23 mit einer Batterie 31, so dass eine Energieversorgung des Gleichstrommotors 23 sichergestellt ist.

Die Kopplung der Batterie 31 mit dem Gleichstrommotor 23 kann auf zwei Weisen erfolgen:
Zum einen kann der Gleichstrommotor 23 über ein Schaltelement 35 direkt mit der Batterie 31 verbunden werden. Zusätzlich kann die Batterie 31 aber auch indirekt über den Umrichter 24 mit dem Gleichstrommotor 23 gekoppelt werden. Hierfür erfolgt ein Umschalten des Schaltelements 35, wodurch der Gleichstrommotor 23 mit dem Umrichter 24 gekoppelt wird. Gleichzeitig wird durch Schließen eines Schalters 36, der Gleichspannungszwischenkreis 28 mit der Batterie 31 gekoppelt, wodurch eine Energieversorgung des Gleichstrommotors 23 über den Umrichter 24 aufrecht erhalten wird.

Die indirekte Kopplung der Batterie 31 bietet den Vorteil, dass die von der Batterie 31 zur Verfügung gestellte Gleichstromenergie mittels des Umrichters 24 dergestalt modifizierbar ist, dass der Gleichstrommotor 23 geregelt betrieben werden kann und damit auch eine geregelte Blattverstellung möglich ist.

Die direkte Kopplung der Batterie 31 mit dem Gleichstrommotor 23 ermöglicht nur das ungeregelte Drehen des Rotorblatts, z. B. aus dem Wind heraus in eine sogenannte Fahnenstellung, wodurch die Windenergieanlage zwangsweise heruntergefahren wird. Die direkte Kopplung kommt nur dann zur Anwendung, wenn eine Rotorblattverstellung über den Umrichter 24 nicht mehr möglich ist, wenn zum Beispiel der Umrichter 24 nicht mehr funktionsfähig ist. Die direkte Kopplung der Batterie 31 mit dem Gleichstrommotor 24 ist nur aus sicherheitsrelevanten Gründen vorgesehen, nämlich um zu gewährleisten, dass bei einem Ausfall des Umrichters immer noch die Möglichkeit gegeben ist, die Windenergieanlage über das Drehen der Rotorblätter in die Fahnenstellung herunterzufahren.

Dennoch wird das Schaltelement 35 vorzugsweise so ausgeführt, dass im stromlosen Zustand die direkte Kopplung der Batterie 31 an den Gleichstrommotor 23 geschaltet ist. Durch diese sogenannte failsafe-Anordnung ist z.B. auch nach einem Blitzschlag, der sowohl die Netzversorgung als auch den Umrichter zerstört, ein sicheres Abfahren der Maschine gewährleistet.

Weiterhin sind in der Fig. 2 schematisch ein erster Winkelgeber 37 und ein zweiter Winkelgeber 38 dargestellt, wobei der erste Winkelgeber 37 auf der Motorwelle des Gleichstrommotors des Blattverstellantriebs angeordnet ist und der zweite Winkelgeber 38 als Zahnritzel ausgebildet ist, das mit einem an der Blattwurzel angeordneten nicht dargestellten Zahnkranz kämmt.

## Patentansprüche

1. Windenergieanlage (10) mit einem Rotor (12), der mindestens ein winkelverstellbares Rotorblatt (14) aufweist, einem Generator, der zur Erzeugung elektrischer Leistung direkt oder indirekt mit dem Rotor (12) und zur Einspeisung der elektrischen Leistung direkt oder indirekt mit einem elektrischen Netz (25) koppelbar ist, mindestens einer Rotorblattverstelleinrichtung zur Einstellung des Winkels des Rotorblatts (14), bestehend aus mindestens einem Blattverstellantrieb (20) mit mindestens einem Gleichstrommotor (23), der über einen Umrichter (24) mit dem elektrischen Netz (25) koppelbar ist, einer mit dem Umrichter (24) gekoppelten Steuerungseinrichtung (33), über die die Steuerung und/oder Regelung des Blattverstellantriebs (20) erfolgt, und einer Gleichspannungsquelle (31), die bei Ausfall des Netzes (25) eine Energieversorgung des Blattverstellantriebs (20) gewährleistet,
**dadurch gekennzeichnet, dass**
die Gleichspannungsquelle (31) über ein Schaltelement (35) wahlweise direkt mit dem Blattverstellantrieb (20) oder indirekt über den Umrichter (24) mit dem Blattverstellantrieb (20) koppelbar ist, wobei die Gleichspannungsquelle (31) vorrangig indirekt über den Umrichter (24) mit dem Blattverstellantrieb (20) koppelbar ist und der Umrichter (24) ausgebildet ist, um sowohl aus dem Netz (25) stammende Wechselspannung als auch die aus der Gleichspannungsquelle (31) stammende Gleichspannung umzuwandeln.

2. Windenergieanlage (10) nach Anspruch 1,
**dadurch gekennzeichnet, dass**
eine direkte Kopplung der Gleichspannungsquelle (31) mit dem Blattverstellantrieb (20) nur dann erfolgt, wenn der Umrichter (24) ausfällt.

3. Windenergieanlage (10) nach Anspruch 1,
**dadurch gekennzeichnet, dass**
bei indirekter Kopplung der Gleichspannungsquelle (31) mit dem Blattverstellantrieb (20) der Blattverstellantrieb (20) über die Steuerungseinrichtung (30) mittels eines, in der Steuerungseinrichtung (33) hinterlegbaren, in der Steuerungseinrichtung (33) erzeugbaren oder der Steuerungseinrichtung (33) zuführbaren Betriebsstörungsmodus steuerbar ist.

4. Windenergieanlage (10) nach Anspruch 1,
**dadurch gekennzeichnet, dass**
bei einem Stillstand der Anlage (10), gleichzeitigem Ausfall des elektrischen Netzes (25) und indirekter Kopplung der Gleichspannungsquelle (31) mit dem Blattverstellantrieb (20) der Blattverstellantrieb (20) über die Steuerungseinrichtung (33) zum Anfahren der Anlage (10) steuerbar ist.

5. Windenergieanlage (10) nach Anspruch 1,
**dadurch gekennzeichnet, dass**
die Gleichspannungsquelle (31) eine Batterie ist.

6. Windenergieanlage (10) nach Anspruch 1,
**dadurch gekennzeichnet, dass**
der Umrichter (24) einen Gleichrichter (27), einen Gleichspannungszwischenkreis (28) und einen Gleichstromsteller (30) mit mindestens einem aktiven Schalter aufweist.

7. Windenergieanlage (10) nach dem vorhergehenden Anspruch,
**dadurch gekennzeichnet, dass**
der aktive Schalter ein IGBT ist.

8. Windenergieanlage (10) nach einem der vorhergehenden Ansprüche,
**dadurch gekennzeichnet, dass**
die Gleichspannungsquelle (31) mit dem Gleichspannungszwischenkreis (28) koppelbar ist.

9. Windenergieanlage (10) nach Anspruch 1,
**dadurch gekennzeichnet, dass**
die Rotorblattverstelleinrichtung mindestens einen Winkelgeber (37, 38) aufweist, der einen Ist-Winkel des Rotorblatts (14) ermittelt und der Steuerungseinrichtung (33) mitteilt.

10. Windenergieanlage (10) vorzugsweise nach Anspruch 1,
**dadurch gekennzeichnet, dass**
die Rotorblattverstelleinrichtung mindestens zwei Winkelgeber (37,38) aufweist, wobei die Steuerungseinrichtung (33) so ausgebildet ist, dass sie bei Ausfall eines Winkelgebers (37,38) auf den anderen Winkelgeber (37,38) umschaltet.

11. Windenergieanlage (10) nach vorhergehendem Anspruch, **dadurch gekennzeichnet, dass** der Blattverstellantrieb (20) eine Antriebsseite und eine Abtriebs- bzw. Rotorblattseite aufweist, wobei einer der Winkelgeber (37,38) auf der Antriebsseite und der andere auf der Abtriebs- bzw. Rotorblattseite des Blattverstellantriebs (20) angeordnet ist.

## Claims

1. Wind turbine (10) comprising a rotor (12) which has at least one angularly adjustable rotor blade (14), a generator which can be coupled directly or indirectly to the rotor (12) to generate electric power and coupled directly or indirectly to an electric grid (25) to feed electric power to said grid, at least one rotor blade adjustment device for adjusting the angle of the rotor blade (14), consisting of at least one blade adjusting drive (20) having at least one DC motor (23) which can be coupled via a converter (24) to the electric grid (25), a control unit (33) coupled to the converter (24) and which controls the blade adjusting drive (20) in an open- and/or closed-loop manner, and a DC voltage source (31) which ensures power supply to the blade adjusting drive (20) in the event of an outage in the grid (25),
**characterised in that**
the DC voltage source (31) can be coupled directly to the blade adjusting drive (20) via a switch element (35) or indirectly to the blade adjusting drive (20) via the converter (24), it being possible to couple the DC voltage source (31) to the blade adjusting drive (20) primarily indirectly via the converter (24) and the converter (24) being designed so as to convert both the AC voltage from the grid (25) and the DC voltage from the DC voltage source (31).

2. Wind turbine (10) according to claim 1,
**characterised in that**
the DC voltage source (31) is directly coupled to the blade adjusting drive (20) only when the converter (24) fails.

3. Wind turbine (10) according to claim 1,
**characterised in that**,
when the DC voltage source (31) is indirectly coupled to the blade adjusting drive (20), the blade adjusting drive (20) can be controlled via the control unit by means of a malfunction mode which can be stored in the control unit (33), generated in the control unit (33), or fed into the control unit (33).

4. Wind turbine (10) according to claim 1,
**characterised in that**
in the event that the turbine (10) is idle, there is a simultaneous outage in the electric grid (25) and the DC voltage source (31) is indirectly coupled to the blade adjusting drive (20), the blade adjusting drive (20) can be controlled by the control unit (33) to start up the turbine (10).

5. Wind turbine (10) according to claim 1,
**characterised in that**
the DC voltage source (31) is a battery.

6. Wind turbine (10) as claimed in claim 1,
**characterised in that**
the converter (24) comprises a rectifier (27), an intermediate DC circuit (28) and a DC chopper (30) having at least one active switch.

7. Wind turbine (10) according to the preceding claim,
**characterised in that** the active switch is an IGBT.

8. Wind turbine (10) according to any of the preceding claims,
**characterised in that**
the DC voltage source (31) can be coupled to the intermediate DC circuit (28).

9. Wind turbine (10) according to claim 1,
**characterised in that**
the rotor blade adjustment device comprises at least one angle sensor (37, 38) which detects the actual angle of the rotor blade (14) and communicates said angle to the control unit (33).

10. Wind turbine (10) preferably according to claim 1,
**characterised in that** the rotor blade adjustment device comprises at least two angle sensors (37, 38), the control unit (33) being designed such that it switches to the other angle sensor (37, 38) in the event of one angle sensor (37, 38) failing.

11. Wind turbine (10) according to the preceding claim,
**characterised in that** the blade adjusting drive (20) comprises a drive side and an output or rotor-blade side, one of the angle sensors (37, 38) being arranged on the drive side and the other on the output or rotor-blade side of the blade adjusting drive (20).

## Revendications

1. Eolienne (10), avec un rotor (12) qui présente au moins une pale de rotor (14) à angle réglable, un générateur qui, pour la production d'une puissance électrique, peut être couplé directement ou indirectement au rotor (12) et qui, pour l'injection de la puissance électrique, peut être couplé directement ou indirectement à un réseau électrique (25), au moins un dispositif de réglage de pale de rotor pour le réglage de l'angle de la pale de rotor (14), composé d'au moins un entraînement de réglage de pale (20) avec au moins un moteur à courant continu (23) qui, par le biais d'un variateur (24), peut être couplé au réseau électrique (25), un dispositif de commande (33) couplé au variateur (24) et par le biais duquel s'effectue la commande et/ou la régulation de l'entraînement de réglage de pale (20), et une source de tension continue (31) qui, en cas de panne du réseau (25), garantit une alimentation en énergie de l'entraînement de réglage de pale (20), **caractérisée en ce que**
la source de tension continue (31) peut, par le biais d'un élément de commutation (35), être couplée au choix directement à l'entraînement de réglage de pale (20) ou indirectement, par le biais du variateur (24), à l'entraînement de réglage de pale (20), la source de tension continue (31) pouvant principalement être couplée indirectement, par le biais du variateur (24), à l'entraînement de réglage de pale (20), et le variateur (24) étant constitué pour convertir aussi bien la tension alternative en provenance du réseau (25) que la tension continue en provenance de la source de tension continue (31).

2. Eolienne (10) selon la revendication 1,
**caractérisée en ce**
**qu'**il ne se produit un couplage direct de la source de tension continue (31) à l'entraînement de réglage de pale (20) que si le variateur (24) tombe en panne.

3. Eolienne (10) selon la revendication 1,
**caractérisée en ce que**,
en cas de couplage indirect de la source de tension continue (31) à l'entraînement de réglage de pale (20), l'entraînement de réglage de pale (20) peut être commandé par le biais du dispositif de commande (30) au moyen d'un mode de panne pouvant être enregistré dans le dispositif de commande (33), pouvant être produit dans le dispositif de commande (33) ou pouvant être acheminé au dispositif de commande (33).

4. Eolienne (10) selon la revendication 1,
**caractérisée en ce que**,
en cas d'arrêt de l'installation (10), en cas de panne simultanée du réseau (25) et de couplage indirect de la source de tension continue (31) à l'entraînement de réglage de pale (20), l'entraînement de réglage de pale (20) peut être commandé par le biais du dispositif de commande (33) pour le démarrage de l'installation (10).

5. Eolienne (10) selon la revendication 1,
**caractérisée en ce que**
la source de tension continue (31) est une batterie.

6. Eolienne (10) selon la revendication 1,
**caractérisée en ce que**
le variateur (24) présente un redresseur (27), un circuit intermédiaire à tension continue (28) et un convertisseur direct de courant continu (30) avec au moins un commutateur actif.

7. Eolienne (10) selon la revendication précédente,
**caractérisée en ce que**
le commutateur actif est un IGBT.

8. Eolienne (10) selon l'une des revendications précédentes,
**caractérisée en ce que**
la source de tension continue (31) peut être couplée au circuit intermédiaire à tension continue (28).

9. Eolienne (10) selon la revendication 1,
**caractérisée en ce que**
le dispositif de réglage de pale de rotor présente au moins un capteur angulaire (37, 38) qui détermine un angle effectif de la pale de rotor (14) et le communique au dispositif de commande (33).

10. Eolienne (10) de préférence selon la revendication 1,
**caractérisée en ce que**
le dispositif de réglage de pale de rotor présente au moins deux capteurs angulaires (37, 38), le dispositif de commande (33) étant constitué de telle sorte que, en cas de panne d'un capteur angulaire (37, 38), il commute vers l'autre capteur angulaire (37, 38).

11. Eolienne (10) selon la revendication précédente,
**caractérisée en ce que**
l'entraînement de réglage de pale (20) présente un côté entraînement et un côté sortie ou respectivement pale de rotor, un des capteurs angulaires (37, 38) étant disposé sur le côté entraînement et l'autre sur le côté sortie ou respectivement pale de rotor de l'entraînement de réglage de pale (20).
